# EUROPÄISCHE PATENTSCHRIFT

(11) **EP 3 421 955 B1**
(45) Veröffentlichungstag und Bekanntmachung des Hinweises auf die Patenterteilung: **05.04.2023**
(21) Anmeldenummer: 17179042.1
(22) Anmeldetag: 30.06.2017
(51) Int. Cl.: G01K 1/14, G01K 7/16

(54) **VERFAHREN ZUR HERSTELLUNG EINES ELEKTRISCHEN SENSORS, FORMTEIL SOWIE ELEKTRISCHER SENSOR MIT FORMTEIL**
METHOD OF MAKING AN ELECTRICAL SENSOR, MOULDED PART AND ELECTRICAL SENSOR WITH MOULDED PART
PROCÉDÉ DE FABRICATION D'UN CAPTEUR ÉLECTRIQUE, PIÈCE MOULÉE ET CAPTEUR ÉLECTRIQUE COMPRENANT UNE PIÈCE MOULÉE

(43) Veröffentlichungstag der Anmeldung: 02.01.2019
(73) Patentinhaber: PGT THERMPROZESSTECHNIK GMBH, 53842 Troisdorf (DE)
(72) Erfinder: GROMMES, Günter, 53721 Siegburg (DE); SCHUBERT, Harald, 53859 Niederkassel (DE); PFISTER, Holger, 51688 Wipperfürth (DE)
(74) Vertreter: Maiwald GmbH

(56) Entgegenhaltungen:
- EP-A1- 0 547 750
- EP-A1- 1 568 978
- EP-A2- 0 833 550

## Beschreibung

Die Erfindung betrifft ein Verfahren zur Herstellung eines elektrischen Sensors, insbesondere eines Temperatursensors, mit den Merkmalen des Oberbegriffs des Anspruchs 1. Darüber hinaus betrifft die Erfindung einen elektrischen Sensor mit einem Formteil. Bei dem Formteil handelt es sich demnach um ein Sensorbauteil.

### Stand der Technik

Aus der EP 0 905 493 A1 ist ein elektrischer Sensor, insbesondere Temperatursensor bekannt, der einfach aufgebaut ist und weitgehend automatisiert herstellbar sein soll. Er umfasst eine Leiterplatte aus einem elektrisch isolierenden Substrat auf der Basis von temperaturbeständigen Materialien, wie beispielsweise Epoxid, Triazinen, Polyimiden (PI) oder Fluoriden (PTFE). Auf der Vorderseite der Leiterplatte ist ein Bauelement in Form eines SMD-Chips angeordnet, der mittels seiner Kontakte mit Anschlussfeldern der Leiterplatte elektrisch verbunden ist. Die elektrische Verbindung ist durch eine Schmelzverbindung, vorzugsweise durch Verlöten, hergestellt. Von den Anschlussfeldern führen auf der Vorderseite und auf der Rückseite der Leiterplatte angeordnete Leiterbahnen zu Anschlusskontaktfeldern, die der elektrischen Verbindung der Leiterplatte mit den Anschlussleitern eines Anschlusskabels dienen. Die elektrische Verbindung ist auch hier bevorzugt durch eine Schmelzverbindung, insbesondere durch Verlöten, hergestellt. Über eine Kontaktdurchführung im Bereich des SMD-Chips ist die rückseitig angeordnete Leiterbahn mit dem zugehörigen Anschlussfeld auf der Vorderseite der Leiterplatte elektrisch verbunden.

Aus der EP 0 833 550 A2 sind eine Leiterplatte mit wenigstens einem Bauelement als Messwiderstand, Heizwiderstand oder Messelektroden-Anordnung sowie ein Verfahren zu deren Herstellung bekannt. Verwendung kann die Leiterplatte insbesondere in einem Temperatursensor finden.

Temperatursensoren gehen zudem aus der EP 1 568 978 A1 sowie der EP 0 547 750 A1 hervor.

Ausgehend von dem vorstehend genannten Stand der Technik liegt der vorliegenden Erfindung die Aufgabe zugrunde, die Herstellung eines elektrischen Sensors, insbesondere eines Temperatursensors, zu vereinfachen. Bei der Herstellung soll zudem ein hoher Automatisierungsgrad erreicht werden. Darüber hinaus soll ein Verfahren angegeben werden, das die Herstellung miniaturisierter elektrischer Sensoren, insbesondere Temperatursensoren, ermöglicht.

Zur Lösung der Aufgabe werden das Verfahren mit den Merkmalen des Anspruchs 1, sowie der elektrische Sensor mit den Merkmalen des Anspruchs 11 vorgeschlagen. Vorteilhafte Weiterbildungen der Erfindung sind den jeweiligen Unteransprüchen zu entnehmen.

### Offenbarung der Erfindung

Bei dem vorgeschlagenen Verfahren zur Herstellung eines elektrischen Sensors, insbesondere eines Temperatursensors, wird ein Trägerelement aus Kunststoff mit einem drahtlosen Messwiderstand in Form eines SMD-Bauteils bestückt, das außenliegende elektrische Anschlussflächen aufweist, wobei das SMD-Bauteil derart auf dem Trägerelement angeordnet und orientiert wird, das die elektrischen Anschlussflächen auf der dem Trägerelement abgewandtem Seite zu liegen kommen. Erfindungsgemäß wird das mit dem Messwiderstand bestückte Trägerelement mit einem Formteil aus Kunststoff verbunden, so dass der Messwiderstand durch das Formteil bereichsweise abgedeckt und gehalten wird und die elektrischen Außenflächen des Messwiderstands zumindest bereichsweise frei liegen. Anschließend wird der Messwiderstand übe die zumindest bereichsweise frei liegenden elektrischen Anschlussflächen mit Anschlussdrähten elektrisch verbunden. Dabei wird das Formteil zur Führung und/oder Positionierung der Anschlussdrähte verwendet und die Führung über im Formteil ausgebildete Führungskanäle bewirkt.

Der erforderliche elektrische Anschluss des Messwiderstands wird demnach bei dem erfindungsgemäßen Verfahren über Anschlussdrähte hergestellt. Diese werden bis an den Messwiderstand herangeführt und im Bereich frei liegender elektrischer Anschlussflächen des Messwiderstands mit diesem elektrisch verbunden. Das heißt, dass es keiner Leiterplatte mit Leiterbahnen zur Kontaktierung des Messwiderstands bedarf. Ferner können Anschluss- bzw. Anschlusskontaktfelder gemäß dem eingangs genannten Stand der Technik entfallen. Das Trägerelement, das es mit dem Messwiderstand zu bestücken gilt, kann demnach vergleichsweise einfach ausgeführt sein. Zugleich reduziert sich die Anzahl der herzustellenden elektrischen Verbindungen bzw. Kontaktstellen. Folglich kann durch Anwendung des erfindungsgemäßen Verfahrens die Herstellung eines elektrischen Sensors, insbesondere Temperatursensors, vereinfacht werden.

Der Begriff "Anschlussdraht" umfasst vorliegend auch eine Anschlusslitze, welche aus mehreren Einzeldrähten besteht. Der Einfachheit halber wird nachfolgend jedoch durchgehend von einem "Anschlussdraht" gesprochen, den es mit einer elektrischen Anschlussfläche zu kontaktieren gilt. Ferner kann der Anschlussdraht bzw. die Anschlusslitze eine isolierende Ummantelung aufweisen, die - zumindest im Bereich der herzustellenden Kontaktierung - ggf. zuvor entfernt werden muss. Dieser Verfahrensschritt ist optional und daher nicht gesondert erwähnt.

Erfindungsgemäß wird bei der Durchführung des erfindungsgemäßen Verfahrens ein drahtloser Messwiderstand in Form eines SMD-Bauteils verwendet, so dass die Herstellung des elektrischen Sensors weiter vereinfacht werden kann. Denn ein SMD-Bauteil weist in der Regel außenliegende elektrische Anschlussflächen auf, die leicht zugänglich und somit einfach zu kontaktieren sind. Das SMD-Bauteil wird hierzu derart auf dem Trägerelement angeordnet bzw. orientiert, dass die elektrischen Anschlussflächen auf der dem Trägerelement abgewandten Seite des Messwiderstands zu liegen kommen. Die Anschlussdrähte können dann über oder auf die elektrischen Anschlussflächen des Messwiderstands gelegt und mit diesen elektrisch verbunden, vorzugsweise verlötet und/oder verklemmt werden. Bevorzugt wird ein in einer Dünnschichttechnologie hergestelltes SMD-Bauteil als drahtloser Messwiderstand verwendet. Derartige SMD-Bauteile sind besonders klein und robust. Zur Herstellung eines Temperatursensors wird bevorzugt ein Platin-Messwiderstand verwendet. Beispielsweise kann ein Platin-Chip-Temperatursensor in SMD-Bauform nach DIN EN 60751 verwendet werden. Dieser kann insbesondere die Form eines flachen Quaders aufweisen, was die Bestückung des Trägerelements mit dem SMD-Bauteil vereinfacht.

Bei dem erfindungsgemäßen Verfahren wird das mit dem Messwiderstand bestückte Trägerelement mit einem Formteil aus Kunststoff verbunden, und zwar in der Weise, dass der Messwiderstand durch das Formteil abgedeckt wird, aber nur partiell. Denn die elektrischen Anschlussflächen des Messwiderstands müssen zur Herstellung der elektrischen Verbindung mit den Anschlussdrähten - zumindest bereichsweise - frei bleiben. Im Übrigen kann der Messwiderstand durch das Formteil abgedeckt werden, so dass ein Schutz des Messwiderstands vor äußeren Einwirkungen erreicht wird. Dadurch, dass der Messwiderstand durch das Formteil bereichsweise bzw. partiell abgedeckt wird, wird zudem der Messwiderstand auf dem Trägerelement gehalten. Das Formteil weist somit neben der Schutzfunktion ferner eine Haltefunktion bzw. die Funktion eines Bauteilhalters auf. Der Messwiderstand kommt dabei bevorzugt zwischen dem Trägerelement und dem Formteil zu liegen.

Des Weiteren wird durch das Formteil zugleich eine Lagefixierung des Messwiderstands auf dem Trägerelement erreicht. Durch die Lagefixierung ist die Position des Messwiderstands auf dem Trägerelement bzw. die Lage der elektrischen Anschlussflächen genau vorgegeben, so dass das Heranführen der Anschlussdrähte an die elektrischen Anschlussflächen vereinfacht wird. Insbesondere kann das Heranführen und Positionieren der Anschlussdrähte automatisiert werden. Ferner wird durch die Lagefixierung des Messwiderstands auf dem Trägerelement eine Zugentlastung der hergestellten elektrischen Verbindungen bewirkt.

Vorteilhafterweise wird das Formteil kraft- und/oder formschlüssig mit dem Trägerelement verbunden. Die kraft- und/oder formschlüssige Verbindung kann beispielsweise durch eine Steck-, Press-, Klemm- und/oder Rastverbindung hergestellt werden. Derartige Verbindungen sind einfach und schnell herstellbar. Dies gilt insbesondere, wenn die kraft- und/oder formschlüssige Verbindung in einem automatisierten Verfahren hergestellt werden soll. Als besonders vorteilhaft wird eine formschlüssige Verbindung des Formteils mit dem Trägerelement angesehen, da der Formschluss die Lage des Formteils in Bezug auf das Trägerelement sichert. Die formschlüssige Verbindung ist somit besonders robust und erleichtert das Handling der verbundenen Bauteile. Beispielsweise kann ein Formschluss durch eine einfache Steckverbindung realisiert werden.

Ferner bevorzugt wird der Messwiderstand beim Bestücken des Trägerelements in eine Ausnehmung des Trägerelements eingesetzt. Die Ausnehmung gibt die Position des Messwiderstands in Bezug auf das Trägerelement vor. Zugleich verhindert sie eine ungewollte Verschiebung des Messwiderstands gegenüber dem Trägerelement. Die Form der Ausnehmung ist hierzu bevorzugt an die Form des Messwiderstands angepasst. Eine besonders einfache Form des Messwiderstands, beispielsweise eine flache Quaderform, wirkt sich in diesem Fall als Vorteil aus. Vorzugsweise wird der Messwiderstand flächenbündig in die Ausnehmung des Trägerelements eingesetzt, so dass eine ebene Anlagefläche für das Formteil geschaffen wird.

In Weiterbildung der Erfindung wird vorgeschlagen, dass das Formteil neben den bereits genannten Funktionen mindestens eine weitere Funktion aufweist. Denn - wie nachfolgend aufgezeigt - kann durch Funktionsintegration die Herstellung eines elektrischen Sensors, insbesondere Temperatursensors weiter vereinfacht werden, insbesondere kann der Automatisierungsgrad weiter erhöht werden.

Des Weiteren wird das Formteil bei der Durchführung des erfindungsgemäßen Verfahrens zur Führung und/oder Positionierung der Anschlussdrähte verwendet. Die Führung wird über im Formteil ausgebildete Führungskanäle bewirkt. Diese sind vorzugsweise in einem Abstand zueinander und/oder parallel verlaufend angeordnet, so dass die Anschlussdrähte durch das Formteil zugleich elektrisch isoliert werden. Hinzu kommt dann noch eine Isolierfunktion des Formteils. Um die Funktion eines Isolierbauteils übernehmen zu können, ist das Formteil bevorzugt aus einem elektrisch isolierenden bzw. elektrisch nichtleitenden Kunststoff hergestellt.

Die Führungsfunktion des Formteils erleichtert das Heranführen der Anschlussdrähte an die elektrischen Anschlussflächen des Messwiderstands. Um sicherzustellen, dass die Enden der Anschlussdrähte exakt über oder auf den elektrischen Anschlussflächen zu liegen kommen, so dass die erforderliche elektrische Verbindung hergestellt werden kann, wird vorzugsweise das Formteil zugleich als Positionierhilfe eingesetzt. Dank dieser Zusatzfunktionen des Formteils kann die Positionierung der Anschlussdrähte weitgehend automatisiert werden.

Bevorzugt weist das Formteil eine längliche Bauform auf, wobei die Führungskanäle zur Führung der Anschlussdrähte im Wesentlichen parallel zur Längserstreckung des Formteils verlaufen. Auf diese Weise können maximale Führungslängen erreicht werden. Des Weiteren bevorzugt weist auch das Trägerelement eine längliche Bauform auf, wobei das Formteil und das Trägerelement derart ausgerichtet werden, dass die im Formteil ausgebildeten Führungskanäle im Wesentlichen parallel zur Längserstreckung des Formteils sowie parallel zur Längserstreckung des Trägerelements verlaufen. In mindestens einer Querrichtung zur Längserstreckung des Formteils bzw. des Trägerelements können die Abmessungen minimiert werden, so dass ein besonders kleinvolumiger elektrischer Sensor geschaffen wird.

In Weiterbildung des erfindungsgemäßen Verfahrens wird ferner vorgeschlagen, dass die Anschlussdrähte im Bereich mindestens einer das Formteil durchsetzenden Ausnehmung mit den elektrischen Anschlussflächen des Messwiderstands elektrisch verbunden werden. Die mindestens eine Ausnehmung ist derart beschaffen, dass sie eine Art Fenster bildet, über welches die elektrische Verbindung mindestens eines Anschlussdrahts mit einer elektrischen Anschlussfläche herstellbar ist. Vorzugsweise ist für jeden Anschlussdraht jeweils eine Ausnehmung bzw. ein Fenster vorgesehen.

Die Größe und/oder die Lage der mindestens einen Ausnehmung ist bzw. sind durch die Lage der elektrischen Anschlussflächen des Messwiderstands vorgegeben. Denn zur Herstellung einer elektrischen Verbindung eines Anschlussdrahts mit einer elektrischen Anschlussfläche muss die mindestens eine im Formteil ausgebildete Ausnehmung in Überdeckung mit mindestens einer elektrischen Anschlussfläche des Messwiderstands gebracht werden. Ferner muss der Anschlussdraht in der Weise positioniert werden, dass ein Ende des Anschlussdrahts im Bereich der Ausnehmung über oder auf der elektrischen Anschlussfläche zu liegen kommt. Anschließend kann die elektrische Verbindung hergestellt werden. Über die mindestens eine im Formteil ausgebildete Ausnehmung kann somit die exakte Lage der elektrischen Verbindung vorgegeben werden, so dass auch dieser Vorgang automatisiert werden kann.

Um sicherzustellen, dass die Enden der Anschlussdrähte im Bereich mindestens einer Ausnehmung über oder auf den elektrischen Anschlussflächen zu liegen kommen, wird vorgeschlagen, dass die im Formteil ausgebildeten Führungskanäle zur Führung der Anschlussdrähte in einer Ausnehmung enden. Vorzugsweise endet jeder Führungskanal in einer ihm zugeordneten Ausnehmung. Über eine die Ausnehmung begrenzende und dem Führungskanal gegenüber liegende Wandfläche ist dann die jeweilige Endlage eines Anschlussdrahts vorgegeben.

Wird das Formteil von mehreren Ausnehmungen, vorzugsweise von zwei Ausnehmungen, durchsetzt, sind diese bevorzugt in einem Abstand zueinander und/oder versetzt zueinander angeordnet. Der Abstand der Ausnehmungen zueinander wird vorzugsweise in Längsrichtung der Anschlussdrähte bzw. der im Formteil ausgebildeten Führungskanäle gemessen. Das heißt, dass die Führungskanäle unterschiedlich lang ausgebildet sind. Auf diese Weise wird eine räumliche Entzerrung der elektrischen Anschlussstellen bewirkt. Ferner wird die Gefahr eines elektrischen Kurzschlusses beseitigt oder zumindest minimiert. Über einen Versatz der Ausnehmungen zueinander kann einem Abstand der Führungskanäle zueinander Rechnung getragen werden.

In Weiterbildung des erfindungsgemäßen Verfahrens wird ferner vorgeschlagen, dass die Anschlussdrähte durch Verlöten und/oder Verklemmen mit den elektrischen Anschlussflächen des Messwiderstands elektrisch verbunden werden.

Soll die elektrische Verbindung durch Verlöten hergestellt werden, kann das Formteil als "Lötlehre" verwendet werden. Das Lot zur Herstellung der Lötverbindung wird hierzu im Bereich einer das Formteil durchsetzenden Ausnehmung eingebracht. Durch die Ausnehmung ist somit die exakte Lage der Lötverbindung vorgegeben, so dass auch dieser Verfahrensschritt automatisiert werden kann.

Alternativ oder ergänzend kann die elektrische Verbindung durch Verklemmen hergestellt werden. Bevorzugt wird hierzu mindestens ein Druckstück verwendet, das in eine Ausnehmung des Formteils eingesetzt und mit dem Formteil kraft- und/oder formschlüssig verbunden wird, so dass mindestens ein Anschlussdraht gegen eine elektrische Anschlussfläche des Messwiderstands gedrückt wird. Über die kraft- und/oder formschlüssige Verbindung des Druckstücks mit dem Formteil kann die erforderliche Druck- bzw. Klemmkraft aufgebracht werden.

Das Druckstück kann bereits mit dem Formteil verbunden sein, beispielsweise über ein Scharnier oder Gelenk. In diesem Fall muss das Druckstück zum Einsetzen in die Ausnehmung des Formteils nur noch verschwenkt werden. Sofern mehrere Druckstücke vorgesehen sind, können diese untereinander verbunden sein, so dass sie als Einheit in das Formteil einsetzbar sind. Die Verbindung kann beispielsweise über eine Art Bügel bewirkt werden, welcher zugleich das Handling der mehrere Druckstücke umfassenden Einheit vereinfacht.

Die kraft- und/oder formschlüssige Verbindung des mindestens einen Druckstücks mit dem Formteil kann in einfacher Weise über eine Steck-, Press-, Klemm- und/oder Rastverbindung hergestellt werden. Beispielsweise können im Bereich einer Ausnehmung zur Aufnahme eines Druckstücks Klemm- und/oder Rastmittel vorgesehen sein, wobei vorzugsweise die Rastmittel das Druckstück hinter- oder umgreifen, so dass ein Formschluss erreicht wird. Sind Rastmittel vorgesehen, die das Druckstück an zwei sich gegenüberliegenden Seiten hinter- bzw. umgreifen, kann hierüber eine Druckkraft erzeugt werden, die ein gleichmäßiges Andrücken eines Anschlussdrahts an eine elektrische Anschlussfläche gewährleistet.

Bevorzugt sind für jeden Anschlussdraht eine das Formteil durchsetzende Ausnehmung sowie ein in die Ausnehmung einsetzbares Druckstück vorgesehen. Ferner bevorzugt verfügt zudem jede Ausnehmung über Rastmittel, die an sich gegenüberliegenden Seiten angeordnet sind und das in die Ausnehmung eingesetzte Druckstück hinter- oder umgreifen. Die Rastmittel können hierzu jeweils nach Art eines Federarms ausgebildet sein, der eine gewisse Nachgiebigkeit besitzt, um das Einsetzen des Druckstücks in die Ausnehmung zu ermöglichen. Nach dem Einsetzen nimmt das Rastmittel seine ursprüngliche Form/Position ein und verrastet hinter dem Druckstück.

In Weiterbildung des erfindungsgemäßen Verfahrens wird darüber hinaus vorgeschlagen, dass nach dem elektrischen Verbinden der Anschlussdrähte mit den elektrischen Anschlussflächen des Messwiderstands das Trägerelement, der Messwiderstand und/oder das Formteil zumindest bereichsweise mit einem Kunststoff umspritzt werden. In Abhängigkeit von der konkreten Ausgestaltung der Kunststoff-Umspritzung bildet diese eine Schutzhülle aus, welche den Messwiderstand vor äußeren Einwirkungen schützt. Zugleich kann eine Abdichtung erreicht werden. Ein derart hergestellter elektrischer Sensor ist demnach besonders robust und somit vielseitig einsetzbar. Sofern es sich bei dem elektrischen Sensor um einen Temperatursensor handelt, wird vorzugsweise ein thermisch leitfähiger Kunststoff zum Umspritzen verwendet. Auf diese Weise bleibt eine schnelle Ansprechbarkeit des Temperatursensors erhalten.

Alternativ oder ergänzend zu einer Umspritzung mit Kunststoff können das Trägerelement, der Messwiderstand und das Formteil in ein Gehäuse eingesetzt werden. Durch ein Gehäuse kann insbesondere die Robustheit des Sensors gegenüber mechanischen Beeinträchtigungen und/oder gegenüber aggressiven Medien erhöht werden.

Vorteilhafterweise wird das erfindungsgemäße Verfahren in einzelnen oder in allen seinen Schritten automatisiert durchgeführt. Über einen hohen Grad der Automatisierung können die Herstellungskosten gesenkt werden. Bevorzugt wird das erfindungsgemäße Verfahren in einem Bestückungsautomaten durchgeführt. Das bei der Durchführung des Verfahrens eingesetzte Formteil kann dabei die Funktion eines Bauteilhalters, eines Führungselements, einer Positionierhilfe, eines Isolierbauteils und/oder einer Lötlehre übernehmen.

Bei dem erfindungsgemäßen Verfahren wird bzw. werden bevorzugt ein Trägerelement und/oder ein Formteil aus einem elektrisch isolierenden und thermisch leitfähigen Kunststoff verwendet. Dies gilt im Besonderen, wenn das Verfahren der Herstellung eines Temperatursensors dient. Die Verwendung eines thermisch leitfähigen Kunststoffs gewährleistet eine schnelle Ansprechbarkeit und eine hohe Messgenauigkeit des Temperatursensors.

Zur Lösung der eingangs genannten Aufgabe wird ferner ein elektrischer Sensor, insbesondere Temperatursensor, mit einem Formteil vorgeschlagen. Das Formteil zeichnet sich dadurch aus, dass es
- aus Kunststoff, insbesondere aus einem elektrisch isolierenden und thermisch leitfähigen Kunststoff, hergestellt ist,
- von mindestens einer Ausnehmung durchsetzt ist,
- mindestens einen Führungskanal aufweist, der vorzugsweise in einer das Formteil durchsetzenden Ausnehmung endet,
- und Verbindungsmittel zur kraft- und/oder formschlüssigen Verbindung mit einem Trägerelement aufweist, und in dem mindestens einen Führungskanal des Formteils ein Anschlussdraht eingelegt ist, der im Bereich der Ausnehmung mit einer elektrischen Anschlussfläche des Messwiderstands elektrisch verbunden, vorzugsweise verlötet und/oder verklemmt, ist.

Das Formteil weist somit alle Ausstattungsmerkmale auf, die den Einsatz des Formteils in dem zuvor beschriebenen erfindungsgemäßen Verfahren ermöglichen. Erfindungsgemäß ist das Formteil über die Verbindungmittel mit einem Trägerelement verbunden, das zuvor mit einem Messwiderstand, vorzugsweise in Form eines SMD-Bauteils, bestückt worden ist. Das Formteil kommt dann als Bauteilhalter zum Einsatz. Über den mindestens einen im Formteil ausgebildeten Führungskanal wird ein Anschlussdraht an den Messwiderstand herangeführt und anschließend im Bereich der Ausnehmung mit der elektrischen Anschlussfläche des Messwiderstands elektrisch verbunden, insbesondere verlötet und/oder verklemmt. Das Formteil kann demnach ferner als Führungselement, Positionierhilfe und/oder als Lötlehre verwendet werden.

In der Ausführung als Kunststoffteil ist das Formteil zudem einfach und kostengünstig herstellbar. Bei Verwendung eines elektrisch isolierenden und thermisch leitfähigen Kunststoffs kann das Formteil zugleich als Isolierbauteil eingesetzt werden.

Die Verbindungsmittel zur Verbindung des Formteils mit dem Trägerelement umfassen vorzugsweise mindestens zwei stiftförmig ausgeführte Verbindungsmittel, die in korrespondierend hierzu ausgebildete Ausnehmungen des Trägerelements einsetzbar sind. Über die in die Ausnehmungen eingreifenden stiftförmigen Verbindungsmittel ist ein Formschluss bewirkbar, der eine Verschiebung des Formteils gegenüber dem Trägerelement verhindert. Dadurch, dass mindestens zwei stiftförmige Verbindungsmittel vorgesehen sind, wird zugleich eine Verdrehsicherung des Formteils bewirkt. Weiterhin bevorzugt sind die Verbindungsmittel an einer Stützfläche des Formteils angeordnet, über die das Formteil am Trägerelement abstützbar ist. Über die Abstützung des Formteils am Trägerelement kann zugleich eine Lagefixierung des Messwiderstands auf dem Trägerelement erreicht werden.

Weiterhin bevorzugt weist das Formteil mindestens zwei Ausnehmungen auf, die das Formteil durchsetzen. Die Ausnehmungen stellen sicher, dass nach dem Verbinden des Formteils mit dem Trägerelement, die elektrischen Anschlussflächen eines auf dem Trägerelement angeordneten Messwiderstands zumindest bereichsweise freigelegt sind. Die Ausnehmungen sind hierzu bevorzugt in einem Abstand zueinander und/oder versetzt zueinander angeordnet. Jede Ausnehmung kann somit einer elektrischen Anschlussfläche des Messwiderstands bzw. einem Anschlussdraht zugeordnet werden. Ferner kann im Bereich einer Ausnehmung eine elektrische Verbindung eines Anschlussdrahts mit einer elektrischen Anschlussfläche des Messwiderstands hergestellt werden.

Vorteilhafterweise besitzt das Formteil eine längliche Form. Die längliche Form begünstigt die Ausbildung eines Abstands zwischen den das Formteil durchsetzenden Ausnehmungen. Ferner bevorzugt weist das Formteil eine flache Bauform auf, wobei die Ausnehmungen das Formteil in Richtung seiner geringsten Ausdehnung durchsetzen. Die Ausnehmungen bilden somit Fenster aus, welche die Zugänglichkeit der elektrischen Anschlussflächen des Messwiderstands gewährleisten, um den erforderlichen elektrischen Anschluss herstellen zu können.

Des Weiteren bevorzugt sind mindestens zwei Führungskanäle vorgesehen, die in einem Abstand zueinander und/oder parallel verlaufend angeordnet sind. Jeder Führungskanal kann zur Führung und/oder Positionierung eines Anschlussdrahts verwendet werden. Über den Abstand der Führungskanäle zueinander kann zugleich eine elektrische Isolierung der Anschlussdrähte bewirkt werden.

Ferner wird vorgeschlagen, dass jeder Führungskanal in einer das Formteil durchsetzenden Ausnehmung endet. Über die Ausnehmung ist somit die Endlage eines Anschlussdrahts vorgebbar. Dadurch ist sichergestellt, dass das Ende eines Anschlussdrahts exakt über oder auf einer elektrischen Anschlussfläche des Messwiderstands zu liegen kommt, um die erforderliche elektrische Verbindung herzustellen.

Die Führungskanäle verlaufen bevorzugt parallel zur Längserstreckung des Formteils, so dass große Führungslängen erzielt werden. Die das Formteil durchsetzenden Ausnehmungen, in denen die Führungskanäle enden, sind vorzugsweise senkrecht hierzu geführt. Weiterhin vorzugsweise sind die Ausnehmungen in einem Abstand zueinander bzw. in Längsrichtung der Führungskanäle hintereinander liegend angeordnet, so dass die in diesen Ausnehmungen endenden Führungskanäle unterschiedlich lang ausgeführt sind. Auf diese Weise wird eine räumliche Entzerrung der elektrischen Anschlussstellen erreicht.

Der elektrische Anschluss bzw. die elektrische Verbindung kann insbesondere durch Verlöten und/oder Verklemmen hergestellt werden. Die zum Verklemmen erforderliche Klemmkraft kann dabei über mindestens ein Druckstück aufgebracht werden, das vorzugsweise in eine Ausnehmung des Formteils eingesetzt und mit dem Formteil kraft- und/oder formschlüssig verbunden wird.

In Weiterbildung der Erfindung wird daher vorgeschlagen, dass das Formteil Verbindungsmittel zur kraft- und/oder formschlüssigen Verbindung mit mindestens einem Druckstück aufweist. Vorzugsweise entspricht die Anzahl der Druckstücke der Anzahl der Anschlussdrähte, so dass jeder Anschlussdraht (bzw. jede Anschlusslitze) separat verklemmbar ist. Weiterhin vorzugsweise sind die zur kraft- und/oder formschlüssigen Verbindung mit dem Druckstück vorgesehenen Verbindungsmittel im Bereich mindestens einer das Formteil durchsetzenden Ausnehmung angeordnet. Das Druckstück kann dann in die Ausnehmung eingesetzt beim Einsetzen in die Ausnehmung mit dem Formteil kraft- und/oder formschlüssig verbunden werden. Vorzugsweise wird über die Verbindungsmittel eine Steck-, Press-, Klemm- und/oder Rastverbindung. Zur Realisierung einer Rastverbindung weisen die Verbindungsmittel bevorzugt Rastmittel auf, die das in die Ausnehmung eingesetzte Druckstück hinter- oder umgreifen. Dadurch ist sichergestellt, dass eine über das Druckstück auf einen Anschlussdraht aufgebrachte Druck- bzw. Klemmkraft dauerhaft erhalten bleibt.

Ein zum Verklemmen einsetzbares Druckstück kann auch bereites mit dem Formteil verbunden sein, beispielsweise über ein Scharnier oder Gelenk. Das Scharnier oder Gelenk erlaubt ein Verschwenken des Druckstücks gegenüber dem Formteil, um es in eine Ausnehmung des Formteils einzusetzen. Anschließend muss das Druckstück in seiner Lage gesichert werden, um die erforderliche Klemmkraft aufzubringen. Die Lagesicherung kann mittels einer kraft- und/oder formschlüssigen Verbindung des Druckstücks mit dem Formteil erreicht werden.

Sofern mehrere Druckstücke vorgesehen sind, die nicht bereits mit dem Formteil verbunden sind, können diese untereinander verbunden werden. Beispielsweise über eine Art Bügel, der zugleich als Griffelement nutzbar ist und das Einsetzen der Druckstücke in die Ausnehmungen erleichtert.

Erfindungsgemäß ist das Formteil kraft- und/oder formschlüssig mit einem Trägerelement aus Kunststoff verbunden, das mit einem Messwiderstand, vorzugsweise in Form eines SMD-Bauteils, bestückt ist. Das Formteil besitzt die Funktion, den Messwiderstand bzw. das SMD-Bauteil in Position zu halten. Das Formteil dient demnach als Bauteilhalter.

Der vorgeschlagene elektrische Sensor, insbesondere Temperatursensor, ist vorzugsweise nach dem zuvor beschriebenen erfindungsgemäßen Verfahren hergestellt worden. Die Herstellung nach dem erfindungsgemäßen Verfahren und/oder die Verwendung eines erfindungsgemäßen Formteils bei der Herstellung ermöglichen einen hohen Automatisierungsgrad, so dass die Herstellungskosten gesenkt werden können.

Erfindungsgemäß ist in dem mindestens einen Führungskanal des Formteils ein Anschlussdraht (bzw. eine Anschlusslitze) eingelegt, der im Bereich der Ausnehmung mit einer elektrischen Anschlussfläche des Messwiderstands elektrisch verbunden, vorzugsweise verlötet und/oder verklemmt, ist. In dieser Ausgestaltung eines elektrischen Sensors kommen gleich mehrere Funktionen des Formteils bei der Herstellung des Sensors zum Tragen. Insbesondere kann das Formteil als Führungselement, Positionierhilfe und/oder Lötlehre eingesetzt werden.

Des Weiteren kann das Formteil als Isolierbauteil zur elektrischen Isolierung des Anschlussdrahts (bzw. der Anschlusslitze) von mindestens einem weiteren Anschlussdraht (bzw. einer weiteren Anschlusslitze) eingesetzt werden, wenn dieser in einen weiteren Führungskanal eingelegt ist, der vorzugsweise in einem Abstand und/oder parallel verlaufend zum ersten Führungskanal angeordnet ist.

Idealerweise ist bzw. sind daher das Trägerelement und/oder das Formteil aus einem elektrisch isolierenden und thermisch leitfähigen Kunststoff hergestellt.

Zum Schutz des erfindungsgemäßen elektrischen Sensors vor äußeren Einwirkungen wird vorgeschlagen, dass das Trägerelement, der Messwiderstand und/oder das Formteil zumindest bereichsweise mit einem Kunststoff umspritzt und/oder von einem Gehäuse umgeben sind. Die Maßnahmen tragen - einzeln oder in Kombination - dazu bei, dass der Messwiderstand optimal vor äußeren Einwirkungen geschützt ist, insbesondere kann eine Abdichtung erreicht werden. Entsprechend steigt die Robustheit des elektrischen Sensors, der somit vielseitig einsetzbar ist.

Handelt es sich bei dem elektrischen Sensor um einen Temperatursensor, sind vorzugsweise das Trägerelement, der Messwiderstand und/oder das Formteil zumindest bereichsweise mit einem thermisch leitfähigem, Kunststoff umspritzt. Der thermisch leitfähige Kunststoff trägt dazu bei, dass der Sensor eine schnelle Ansprechbarkeit und eine hohe Messgenauigkeit aufweist.

Die Erfindung wird nachfolgend anhand der beigefügten Zeichnungen näher erläutert. Die Zeichnungen zeigen:
- Fig. 1: eine Draufsicht auf einen elektrischen Sensor gemäß einer bevorzugten Ausführungsform der Erfindung vor dem Umspritzen mit Kunststoff,
- Fig. 2: eine perspektivische Darstellung des elektrischen Sensors der Fig. 1,
- Fig.3: einen Querschnitt durch den elektrischen Sensor der Fig. 1,
- Fig. 4: eine Seitenansicht auf den elektrischen Sensor der Fig. 1 nach dem Umspritzen mit Kunststoff,
- Fig. 5: eine Draufsicht auf das Formteil des elektrischen Sensors der Fig. 1,
- Fig. 6: eine Seitenansicht des Formteils des elektrischen Sensors der Fig. 1,
- Fig. 7: eine Seitenansicht des Formteils des elektrischen Sensors der Fig. 1 um 90° gedreht,
- Fig. 8: eine perspektivische Darstellung eines abgewandelten erfindungsgemäßen Formteils mit Druckstück zum Verklemmen eines Anschlussdrahts und
- Fig. 9: eine perspektivische Darstellung des Druckstücks der Fig. 8.

### Ausführliche Beschreibung der Zeichnungen

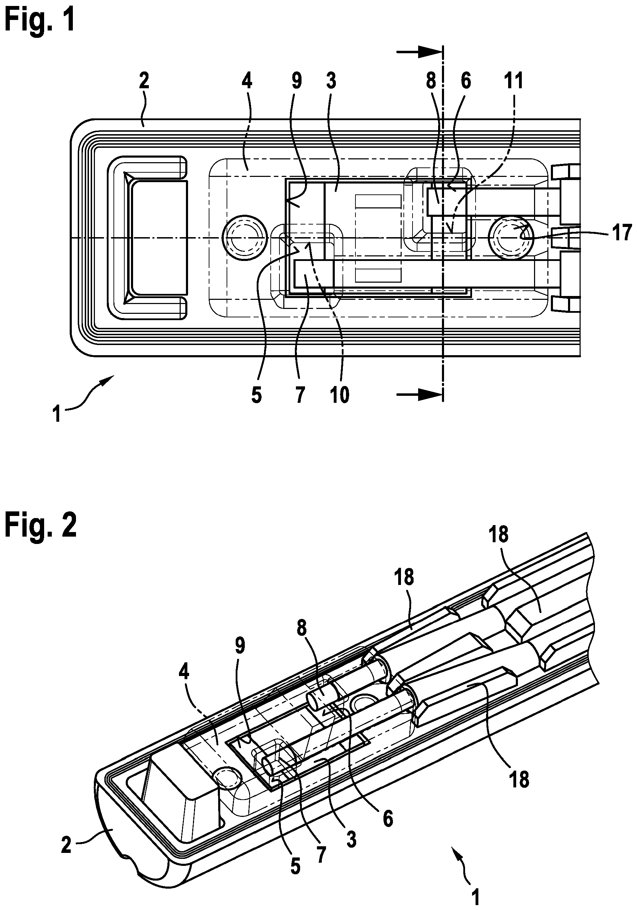

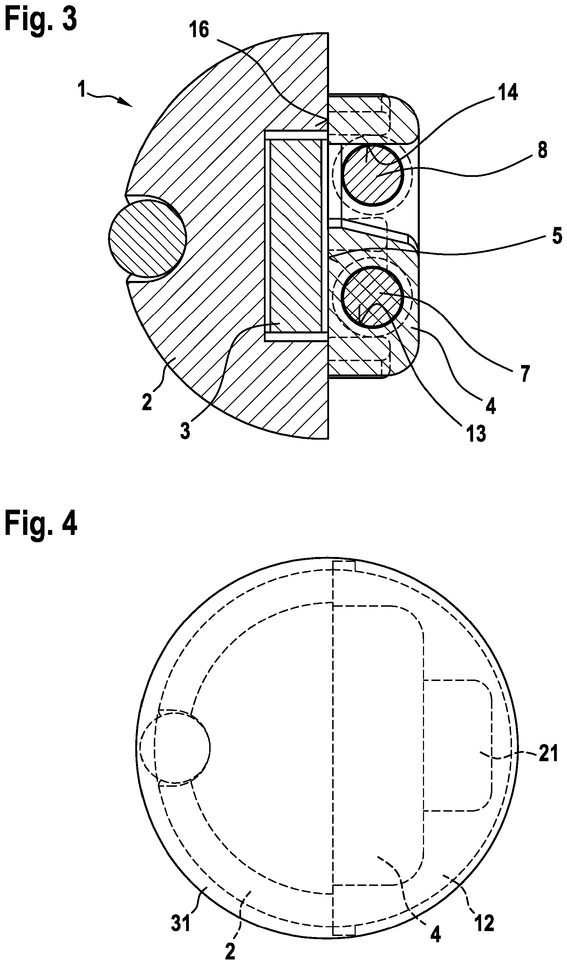

Der in der Fig. 1 dargestellte elektrische Sensor 1 umfasst ein längliches, im Querschnitt halbkreisförmiges Trägerelement 2, das mit einem Messwiderstand 3 bestückt ist. Bei dem Messwiderstand 3 handelt es sich um ein SMD-Bauteil, das keine Anschlussdrähte, sondern elektrische Anschlussflächen 5, 6 aufweist. Das SMD-Bauteil ist in eine Ausnehmung 9 des Trägerelements 2 flächenbündig eingesetzt (siehe Fig. 3).

Zur weiteren Lagefixierung des SMD-Bauteils ist auf das Trägerelement 2 ein Formteil 4 mit Ausnehmungen 10, 11 aufgesteckt, so dass die Ausnehmungen 10, 11 im Bereich der elektrischen Anschlussflächen 5, 6 des Messwiderstands 3 zu liegen kommen. Die fensterartigen Ausnehmungen 10, 11 dienen der Freilegung der elektrischen Anschlussflächen 5, 6, um diese mit Anschlussdrähten 7, 8 elektrisch verbinden zu können, die in Führungskanälen 13, 14 des Formteils 4 aufgenommen sind. Die elektrische Verbindung kann beispielsweise durch Verlöten hergestellt werden. Die Steckverbindung des Formteils 4 mit dem Trägerelement 2 ist über stiftförmige Verbindungsmittel 15 hergestellt, die auf einer dem Trägerelement 2 zugewandten Stützfläche 16 des Formteils 4 ausgebildet sind und in entsprechende Ausnehmungen 17 des Trägerelements 2 eingreifen.

Die Führungskanäle 13, 14 erstrecken sich in Längsrichtung des Formteils 4 und sind in einem Abstand parallel zueinander geführt. Der den Anschlussdraht 7 aufnehmende Führungskanal 13 ist länger als der den Anschlussdraht 8 aufnehmende Führungskanal 14 ausgeführt, da der Messwiderstand 3 in der Weise orientiert ist, dass die die elektrischen Anschlussflächen 5, 6 in Längsrichtung des Formteils 4 hintereinander zu liegen kommen. Dadurch wird eine räumliche Entzerrung der elektrischen Anschlussstellen bewirkt, so dass die Gefahr eines Kurzschlusses beseitigt wird. Entsprechend sind auch die beiden fensterartigen Ausnehmungen 10, 11 des Formteils 4 in einem Abstand zueinander angeordnet. Darüber hinaus sind die Ausnehmungen 10, 11 in Querrichtung des Formteils 4 versetzt zueinander angeordnet, was dem Umstand Rechnung trägt, dass die Führungskanäle 13, 14 zur elektrischen Isolierung der hierin aufgenommenen Anschlussdrähte 7, 8 in einem Abstand zueinander parallel verlaufen.

Wie insbesondere der Fig. 3 zu entnehmen ist, kommen die in den Führungskanälen 13, 14 aufgenommenen Anschlussdrähte 7, 8 über den elektrischen Anschlussflächen 5, 6 des Messwiderstands 3 zu liegen. Das heißt, dass ein gewisser Spalt zur Herstellung der elektrischen Verbindung mittels Verlöten verbleibt. Nach dem Verlöten wird der Spalt von dem Lot (nicht dargestellt) ausgefüllt.

Fig. 2 zeigt, dass das Trägerelement 2 deutlich länger als das Formteil ausgeführt sein kann. Im Bereich der Verlängerung weist das Trägerelement 2 vorliegend Führungsstege 18 auf, zwischen denen die Anschlussdrähte 7, 8 eingelegt sind.

Somit wird eine zusätzliche Führung der Anschlussdrähte 7, 8 über das Trägerelement 2 erreicht.

Die Führung der Anschlussdrähte 7, 8 erweist sich insbesondere bei der Herstellung des Sensors 1 als Vorteil. Denn aufgrund der Führung können die Anschlussdrähte 7, 8 eingeschossen werden, so dass die Herstellung des Sensors 1 zumindest weitgehend automatisiert werden kann.

Vorzugsweise wird bei der Herstellung des Sensors 1 erst der Messwiderstand 3 in die Ausnehmung 9 des Trägerelements 2 eingesetzt, anschließend das Formteil 4 auf das Trägerelement 2 aufgesteckt. Danach werden die Anschlussdrähte 7, 8 eingeschossen, wobei das Formteil 4 als Führungselement und Positionierhilfe dient. Denn über die Führungskanäle 13, 14 und die fensterartigen Ausnehmungen 10, 11 ist die jeweilige Lage, insbesondere Endposition, der Anschlussdrähte 7, 8 genau vorgegeben. Die Enden der Anschlussdrähte 7, 8 kommen genau über den elektrischen Anschlussflächen 5, 6 des Messwiderstands 3 zu liegen, so dass über die fensterartigen Ausnehmungen 10, 11 die elektrische Verbindung durch Verlöten hergestellt werden kann. Das Formteil 4 dient dabei als Lötlehre. Die Herstellung des Sensors kann somit vollständig automatisiert werden.

Abschließend kann der Sensor 1 mit Kunststoff 12 umspritzt bzw. teilumspritzt werden, wobei es sich vorzugsweise um einen elektrisch isolierenden und thermisch leitfähigen Kunststoff 12 handelt. Der Sensor 1 der Fig. 1 mit einer entsprechenden Teilumspritzung aus Kunststoff 12 ist beispielhaft in der Fig. 4 dargestellt. Der Kunststoff 12 ist derart an das Trägerelement 2 angespritzt, dass das Formteil 4 vollständig von Kunststoff 12 umgeben ist. Auf diese Weise wird eine optimale Abdichtung erreicht. Durch die Teilumspritzung aus Kunststoff 12 weist der Sensor 1 einen kreisförmigen Querschnitt auf. Dies erleichtert das Einsetzen des Sensors 1 in ein Gehäuse 31, sofern erwünscht. Ein Gehäuse 31 ist optional und kann alternativ oder ergänzend zu einer Umspritzung mit Kunststoff 12 vorgesehen sein.

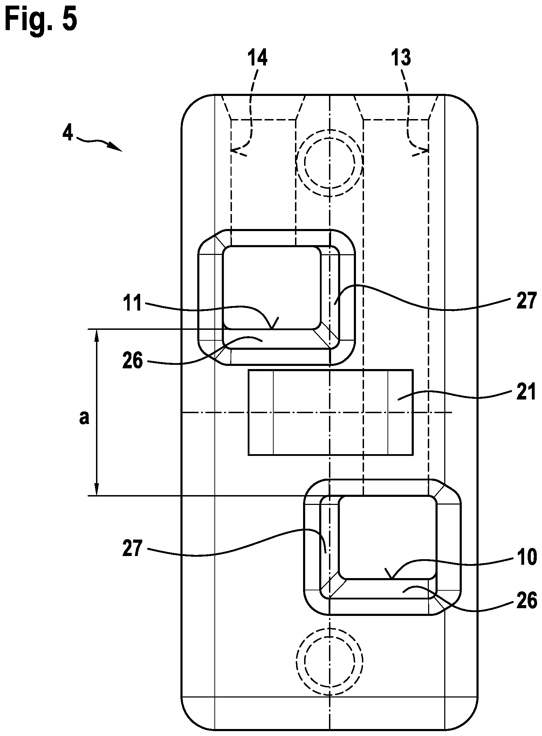

Den Figuren 5 bis 7 sind eine Draufsicht und verschiedene Ansichten des Formteils 4 des in den Figuren 1 bis 4 dargestellten Sensors 1 zu entnehmen.

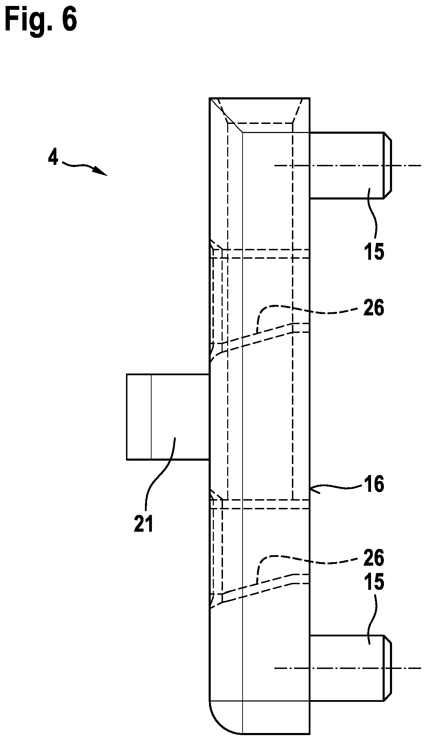

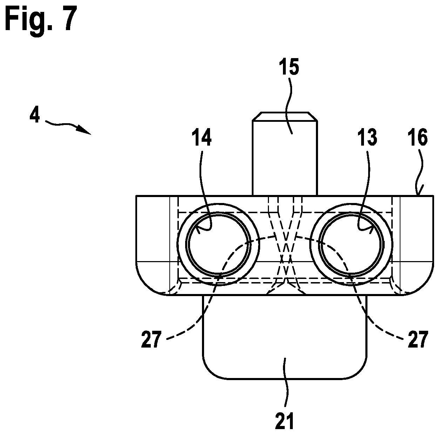

Die Draufsicht der Fig. 5 in Verbindung mit der Seitenansicht der Fig. 6 und/oder der Fig. 7 zeigt, dass das Formteil 4 im Wesentlichen die Form eines flachen länglichen Quaders besitzt. Oberseitig, das heißt auf der Seite, die der Stützfläche 16 abgewandt ist, sind die Ecken abgerundet. Auf der Oberseite ist zudem ein in etwa mittig angeordneter und in Querrichtung verlaufender Steg 21 angeordnet, der als Griffelement dient. An dem Steg 21 kann das Formteil 4 gegriffen und versetzt werden, um es beispielweise mit einem Trägerelement 2 zu verbinden. Unterseitig, das heißt an der Stützfläche 16, weist das Formteil 4 zwei stiftförmige Verbindungsmittel 15 zur formschlüssigen Verbindung mit dem Trägerelement 2 auf.

Wie insbesondere der Fig. 5 zu entnehmen ist, besitzt das Formteil 4 ferner zwei fensterartige Ausnehmungen 10, 11, die in Längsrichtung des Formteils 4 in einem Abstand a zueinander angeordnet sind. In Querrichtung des Formteils 4 sind die beiden Ausnehmungen 10, 11 versetzt zueinander angeordnet. Durch den Versatz in Querrichtung ist sichergestellt, dass jeder Führungskanal 13, 14 zur Aufnahme eines Anschlussdrahts 7, 8 in einer Ausnehmung 10, 11 endet. Denn der Versatz der Ausnehmungen 10, 11 in Querrichtung entspricht im Wesentlichen dem Abstand der beiden parallel geführten Führungskanäle 13, 14 zueinander (siehe auch Fig. 7).

Vorliegend endet der Führungskanal 13 in der Ausnehmung 10 und der Führungskanal 14 in der Ausnehmung 11.

Da das Formteil 4 aus einem elektrisch nicht leitenden Kunststoff hergestellt ist, kann über den Abstand der im Formteil 4 ausgebildeten Führungskanäle 13, 14 zugleich eine elektrische Isolierung der hierin eingelegten Anschlussdrähte 7, 8 erreicht werden, sofern das Formteil 4 aus einem elektrisch isolierenden Werkstoff, insbesondere Kunststoff hergestellt ist.

Die im Formteil 4 vorgesehenen Ausnehmungen 10, 11 ermöglichen eine Verwendung des Formteils 4 als Lötlehre, wenn durch Verlöten eine elektrische Verbindung eines in einen Führungskanal 13, 14 eingelegten Anschlussdrahts 7, 8 mit einer elektrischen Anschlussfläche 5, 6 eines Messwiderstands 3 hergestellt werden soll. Wie in den Figuren 5 bis 7 dargestellt können die Ausnehmungen 10, 11 jeweils mindestens eine begrenzende Flanke 26, 27 aufweisen, die schräg in Bezug auf die Stützfläche 16 verläuft. Dadurch bilden die Ausnehmungen 10, 11 eine Art Trichter aus, der das Herstellen der Lötverbindung zwischen einem Anschlussdraht 7, 8 und einer elektrischen Anschlussfläche 5, 6 vereinfacht.

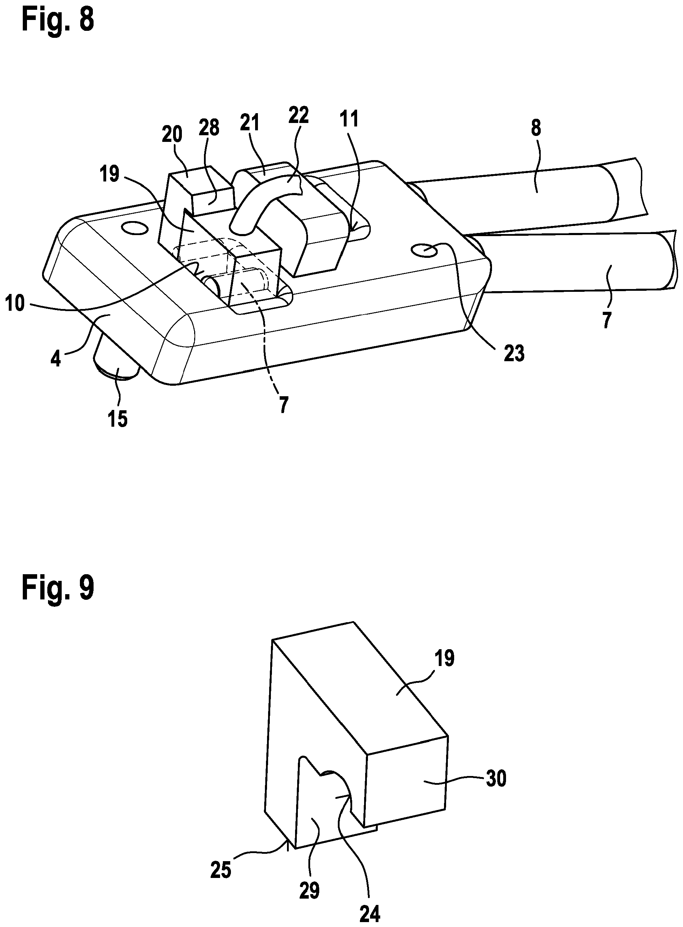

In den Figuren 8 und 9 ist eine weitere bevorzugte Ausführungsform eines erfindungsgemäßen Formteils 4 zur Herstellung eines elektrischen Sensors 1 dargestellt. Das Formteil 4 zeichnet sich durch Verbindungsmittel 20 aus, die jeweils an zwei sich gegenüberliegenden Seiten einer Ausnehmung 10, 11 angeordnet sind, um ein in der Ausnehmung 10, 11 aufgenommenes Druckstück 19 mit dem Formteil 4 formschlüssig zu verbinden. Das Drückstück 19 wiederum dient der Herstellung der elektrischen Verbindung eines Anschlussdrahts 7, 8 mit einer elektrischen Anschlussfläche 5, 6 des Messwiderstands 3 durch Verklemmen.

Der Einfachheit halber ist in der Fig. 8 nur ein Druckstück 19 dargestellt, das in die Ausnehmung 10 eingesetzt ist. Analog ist vorzugsweise ein weiteres Druckstück 19 in die Ausnehmung 11 eingesetzt (nicht dargestellt).

Ferner ist im Bereich der Ausnehmung 10 nur ein Verbindungsmittel 20 zur formschlüssigen Verbindung des Druckstücks 19 mit dem Formteil 4 dargestellt, um die Zeichnung übersichtlich zu halten. Vorzugsweise ist auf der gegenüberliegenden Seite der Ausnehmung 10 ein weiteres Verbindungsmittel 20 in gespiegelter Anordnung vorgesehen, so dass jeweils endseitig an den Verbindungsmitteln 20 angeordnete Rastnasen 28 das Druckstück 19 hintergreifen und niederhalten. Auf diese Weise kann die zum Verklemmen der Anschlussdrähte 7, 8 erforderliche Klemmkraft aufgebracht werden.

In der Fig. 8 ist ferner ein Bügel 22 angedeutet, über den das Druckstück 19 mit einem weiteren Druckstück 19 (nicht dargestellt) verbunden bzw. verbindbar ist. Der Bügel 22 erleichtert das Einsetzen der Druckstücke 19 in die Ausnehmungen 10, 11, da beide Druckstücke 19 gleichzeitig montiert werden können. Der Bügel 22 kann dabei als Griffelement dienen, um die Drückstücke 19 anzuheben und zu versetzen.

Neben den Ausnehmungen 10, 11 weist das Formteil 4 der Fig. 8 mehrere Zuflussbohrungen 23 auf, die das Formteil 4 ebenfalls durchsetzen. Beim Umspritzen mit Kunststoff kann somit die Kunststoffschmelze zwischen das Formteil 4 und das Trägerelement 2 gelangen. Ist dies nicht erwünscht, können die Zuflussbohrungen 23 auch entfallen.

Der Fig. 9 ist das Druckstück 19 der Fig. 8 in einer Einzeldarstellung zu entnehmen. Das Druckstück 19 ist vorliegend im Wesentlichen L-förmig ausgeführt, so dass ein Schenkel 29 mit einer stirnseitigen Stützfläche 25 ausgebildet wird, über welche das Druckstück 19 an dem Trägerelement 2 abstützbar ist. Denn das Druckstück 19 wird vorzugsweise erst in die Ausnehmung 10 eingesetzt, nachdem das Formteil 4 mit dem Trägerelement 2 verbunden worden ist. Der andere Schenkel 30 des Druckstücks 19 weist auf seiner dem Trägerelement 2 zugewandten Seite eine Führung 24 auf, in welcher der Anschlussdraht 7 zu liegen kommt, wenn das Druckstück 19 in die Ausnehmung 10 eingesetzt und über die Verbindungsmittel 20 mit dem Formteil 4 verbunden wird. Auf diese Weise ist sichergestellt, dass der Anschlussdraht 7 zur Anlage und damit in elektrisch leitendem Kontakt mit der elektrischen Anschlussfläche 5 des Messwiderstands 3 gelangt.

Die Erfindung ist nicht auf die in den Figuren 1 bis 9 dargestellten bevorzugten Ausführungsformen beschränkt, sondern schließt im Umfang der Ansprüche auch Abwandlungen mit ein. Diese können insbesondere die konkrete Ausgestaltung des Formteils 4 in Bezug auf seine Verbindungsmittel 15 und/oder die Lage, Form und/oder die Größe der Ausnehmungen 10, 11 betreffen. Ferner kann das Trägerelement 2 eines erfindungsgemäßen Sensors 1 abweichend von den Darstellungen der Fig. 1 bis 4 gestaltet sein.

### Bezugszeichenliste

- 1: Sensor
- 2: Trägerelement
- 3: Messwiderstand
- 4: Formteil
- 5: Anschlussfläche
- 6: Anschlussfläche
- 7: Anschlussdraht
- 8: Anschlussdraht
- 9: Ausnehmung
- 10: Ausnehmung
- 11: Ausnehmung
- 12: Kunststoff, Kunststoff-Umspritzung
- 13: Führungskanal
- 14: Führungskanal
- 15: Verbindungsmittel
- 16: Stützfläche
- 17: Ausnehmung
- 18: Führungssteg
- 19: Druckstück
- 20: Verbindungsmittel
- 21: Steg, Griffelement
- 22: Bügel, Griffelement
- 23: Zuflussbohrung
- 24: Führung
- 25: Stützfläche
- 26: Flanke
- 27: Flanke
- 28: Rastnase
- 29: Schenkel
- 30: Schenkel
- 31: Gehäuse

## Patentansprüche

1. Verfahren zur Herstellung eines elektrischen Sensors (1), insbesondere eines Temperatursensors, bei dem ein Trägerelement (2) aus Kunststoff mit einem drahtlosen Messwiderstand (3) in Form eines SMD-Bauteils bestückt wird, das außenliegende elektrische Anschlussflächen (5,6) aufweist, wobei das SMD-Bauteil derart auf dem Trägerelement (2) angeordnet und orientiert wird, dass die elektrischen Anschlussflächen (5, 6) auf der dem Trägerelement (2) abgewandten Seite zu liegen kommen,
wobei
das mit dem Messwiderstand (3) bestückte Trägerelement (2) mit einem Formteil (4) aus Kunststoff verbunden wird, so dass der Messwiderstand (3) durch das Formteil (4) bereichsweise abgedeckt und gehalten wird und die elektrischen Anschlussflächen (5, 6) des Messwiderstands (3) zumindest bereichsweise frei liegen, anschließend der Messwiderstand (3) über die zumindest bereichsweise frei liegenden elektrischen Anschlussflächen (5, 6) mit Anschlussdrähten (7, 8) elektrisch verbunden wird, wobei das Formteil (4) zur Führung und/oder Positionierung der Anschlussdrähte (7, 8) verwendet wird und die Führung über im Formteil (4) ausgebildete Führungskanäle (13, 14) bewirkt wird.

2. Verfahren nach Anspruch 1,
wobei
das Formteil (4) kraft- und/oder formschlüssig mit dem Trägerelement (2) verbunden wird, beispielsweise durch eine Steck-, Press-, Klemm- und/oder Rastverbindung.

3. Verfahren nach Anspruch 1 oder 2,
wobei
der Messwiderstand (3) beim Bestücken des Trägerelements (2), vorzugsweise flächenbündig, in eine Ausnehmung (9) des Trägerelements (2) eingesetzt wird.

4. Verfahren nach einem der vorhergehenden Ansprüche, sz
wobei
die im Formteil (4) ausgebildeten Führungskanäle (13, 14) in einem Abstand zueinander und/oder parallel verlaufend angeordnet sind, so dass die Anschlussdrähte (7, 8) durch das Formteil (4) elektrisch isoliert werden.

5. Verfahren nach einem der vorhergehenden Ansprüche,
wobei
die Anschlussdrähte (7, 8) im Bereich mindestens einer das Formteil (4) durchsetzenden Ausnehmung (10, 11) mit den elektrischen Anschlussflächen (5, 6) des Messwiderstands (3) elektrisch verbunden werden.

6. Verfahren nach einem der vorhergehenden Ansprüche,
wobei
die Anschlussdrähte (7, 8) durch Verlöten und/oder Verklemmen mit den elektrischen Anschlussflächen (5, 6) des Messwiderstands (3) elektrisch verbunden werden.

7. Verfahren nach einem der vorhergehenden Ansprüche,
wobei
zur Herstellung einer elektrischen Verbindung durch Verklemmen ein Druckstück (19) verwendet wird, wobei vorzugsweise das Druckstück (19) in eine das Formteil (4) durchsetzende Ausnehmung (10, 11) eingesetzt wird, so dass mindestens ein Anschlussdraht (7, 8) gegen eine elektrische Anschlussfläche (5, 6) des Messwiderstands (3) gedrückt wird.

8. Verfahren nach einem der vorhergehenden Ansprüche,
wobei
nach dem elektrischen Verbinden der Anschlussdrähte (7, 8) mit den elektrischen Anschlussflächen (5, 6) des Messwiderstands (3) das Trägerelement (2), der Messwiderstand (3) und/oder das Formteil (4) zumindest bereichsweise mit einem Kunststoff (12), vorzugsweise mit einem thermisch leitfähigen Kunststoff, umspritzt und/oder in ein Gehäuse (31) eingesetzt werden.

9. Verfahren nach einem der vorhergehenden Ansprüche,
wobei
das Verfahren in einzelnen oder allen seinen Schritten automatisiert, vorzugsweise in einem Bestückungsautomaten, durchgeführt wird.

10. Verfahren nach einem der vorhergehenden Ansprüche,
wobei
ein Trägerelement (2) und/oder ein Formteil (4) aus einem elektrisch isolierenden und thermisch leitfähigen Kunststoff verwendet wird bzw. werden.

11. Elektrischer Sensor (1), insbesondere Temperatursensor, mit einem Trägerelement (2) aus Kunststoff, das mit einem Messwiderstand (3), vorzugsweise in Form eines SMD-Bauteils, bestückt ist, und mit einem Formteil (4), das kraft- und/oder formschlüssig mit dem Trägerelement (2) verbunden ist, wobei das Formteil (4)
- aus Kunststoff, insbesondere aus einem elektrisch isolierenden und thermisch leitfähigen Kunststoff, hergestellt ist,
- von mindestens einer Ausnehmung (10, 11) durchsetzt ist,
- mindestens einen Führungskanal (13, 14) aufweist, der in einer das Formteil (4) durchsetzenden Ausnehmung (10, 11) endet,
- und Verbindungsmittel (15) zur kraft- und/oder formschlüssigen Verbindung mit dem Trägerelement (2) aufweist,
und wobei in dem mindestens einen Führungskanal (13, 14) des Formteils (4) ein Anschlussdraht (7, 8) eingelegt ist, der im Bereich der Ausnehmung (10, 11) mit einer elektrischen Anschlussfläche (5, 6) des Messwiderstands (3) elektrisch verbunden, vorzugsweise verlötet und/oder verklemmt, ist.

12. Elektrischer Sensor (1) nach Anspruch 11, wobei die Verbindungsmittel (15) zur Verbindung des Formteils (4) mit dem Trägerelement (2) mindestens zwei stiftförmig ausgeführte Verbindungsmittel (15) umfassen und/oder an einer Stützfläche (16) des Formteils (4) angeordnet sind, über die das Formteil (4) am Trägerelement (2) abstützbar ist.

13. Elektrischer Sensor (1) nach Anspruch 11 oder 12,
wobei
mindestens zwei das Formteil (4) durchsetzende Ausnehmungen (10, 11) vorgesehen sind, die vorzugsweise in einem Abstand zueinander und/oder versetzt zueinander angeordnet sind.

14. Elektrischer Sensor (1) nach einem der Ansprüche 11 bis 13,
wobei
mindestens zwei Führungskanäle (13, 14) vorgesehen sind, die in einem Abstand zueinander und/oder parallel verlaufend angeordnet sind, wobei vorzugsweise jeder Führungskanal (13, 14) in einer das Formteil (4) durchsetzenden Ausnehmung (10, 11) endet.

15. Elektrischer Sensor (1) nach einem der Ansprüche 11 bis 14,
wobei
das Formteil (4) Verbindungsmittel (20) zur kraft- und/oder formschlüssigen Verbindung mit einem Druckstück (19) aufweist, wobei vorzugsweise die Verbindungsmittel (20) im Bereich mindestens einer das Formteil (4) durchsetzenden Ausnehmung (10, 11) zur Aufnahme des Druckstücks (19) angeordnet sind.

16. Elektrischer Sensor (1) nach einem der Ansprüche 11 bis 15,
wobei
das Trägerelement (2) und/oder das Formteil (4) aus einem elektrisch isolierenden und thermisch leitfähigen Kunststoff hergestellt ist bzw. sind.

17. Elektrischer Sensor (1) nach einem der Ansprüche 11 bis 16,
wobei
das Trägerelement (2), der Messwiderstand (3) und/oder das Formteil (4) zumindest bereichsweise mit einem Kunststoff (12), vorzugsweise mit einem thermisch leitfähigen Kunststoff, umspritzt und/oder von einem Gehäuse (31) umgeben sind.

## Claims

1. A method for producing an electrical sensor (1), in particular a temperature sensor, in which a carrier element (2) made of plastic is fitted with a wireless measuring resistor (3) in the form of an SMD component which has external electrical connection surfaces (5, 6), wherein the SMD component is arranged and oriented on the carrier element (2) in such a way that the electrical connection surfaces (5, 6) come to lie on the side facing away from the carrier element (2), wherein the carrier element (2) equipped with the measuring resistor (3) is connected to a molded part (4) made of plastic, so that the measuring resistor (3) is covered and held by the molded part (4) in areas and the electrical connection surfaces (5, 6) of the measuring resistor (3) are exposed at least in areas, then the measuring resistor (3) is electrically connected to connecting wires (7, 8) via the electrical connection surfaces (5, 6) which are exposed at least in areas, wherein the molded part (4) being used to guide and/or position the connecting wires (7, 8) and the guidance being effected via guide channels (13, 14) formed in the molded part (4).

2. The method according to claim 1, wherein the molded part (4) is connected to the carrier element (2) in a force-fitting and/or form-fitting manner, for example by a plug-in, press, clamp and/or snap-in connection.

3. The method according to claim 1 or 2, wherein the measuring resistor (3) is inserted into a recess (9) of the carrier element (2), preferably flush with the surface, when the carrier element (2) is fitted.

4. The method according to one of the preceding claims, wherein the guide channels (13, 14) formed in the molded part (4) are arranged at a distance from one another and/or running parallel, so that the connecting wires (7, 8) are electrically insulated by the molded part (4).

5. The method according to one of the preceding claims, wherein the connecting wires (7, 8) are electrically connected to the electrical connecting surfaces (5, 6) of the measuring resistor (3) in the area of at least one recess (10, 11) passing through the molded part (4).

6. The method according to one of the preceding claims, wherein the connecting wires (7, 8) are electrically connected to the electrical connecting surfaces (5, 6) of the measuring resistor (3) by soldering and/or clamping.

7. The method according to one of the preceding claims, wherein a thrust piece (19) is used to produce an electrical connection by clamping, wherein preferably the thrust piece (19) is inserted into a recess (10, 11) passing through the molded part (4), so that at least one connecting wire (7, 8) is pressed against an electrical connecting surface (5, 6) of the measuring resistor (3).

8. The method according to one of the preceding claims, wherein after the electrical connection of the connecting wires (7, 8) to the electrical connecting surfaces (5, 6) of the measuring resistor (3), the carrier element (2), the measuring resistor (3) and/or the molded part (4) are encapsulated at least in areas with a plastic (12), preferably with a thermally conductive plastic, and/or are inserted into a housing (31).

9. The method according to one of the preceding claims, wherein the method is automated in individual or all of its steps, preferably in an automatic placement machine.

10. The method according to one of the preceding claims, wherein a carrier element (2) and/or a molded part (4) made of an electrically insulating and thermally conductive plastic is/are used.

11. An electrical sensor (1), in particular a temperature sensor, having a carrier element (2) made of plastic, which is equipped with a measuring resistor (3), preferably in the form of an SMD component, and having a molded part (4), which is connected to the carrier element (2) in a force-fitting and/or form-fitting manner,
wherein the molded part (4)
- is made of a plastic, in particular of an electrically insulating and thermally conductive plastic,
- is penetrated by at least one recess (10, 11)
- has at least one guide channel (13, 14) which ends in a recess (10, 11) passing through the molded part (4)
- and has connecting means (15) for the force-fitting and/or form-fitting connection to the carrier element (2),
and wherein a connecting wire (7, 8) is inserted in the at least one guide channel (13, 14) of the molded part (4), which is electrically connected, preferably soldered and/or clamped, in the area of the recess (10, 11) to an electrical connecting surface (5, 6) of the measuring resistor (3).

12. The electrical sensor (1) according to claim 11, wherein the connecting means (15) for connecting the molded part (4) to the carrier element (2) comprise at least two pin-shaped connecting means (15) and/or are arranged on a supporting surface (16) of the molded part (4), via which the molded part (4) can be supported on the carrier element (2).

13. The electrical sensor (1) according to claim 11 or 12, wherein at least two recesses (10, 11) passing through the molded part (4) are provided, which are preferably arranged at a distance from one another and/or offset from one another.

14. The electrical sensor (1) according to one of claims 11 to 13, wherein at least two guide channels (13, 14) are provided, which are arranged at a distance from one another and/or running parallel to one another, wherein preferably each guide channel (13, 14) ends in a recess (10, 11) passing through the molded part (4).

15. The electrical sensor (1) according to one of claims 11 to 14, wherein the molded part (4) has connecting means (20) for force-fitting and/or form-fitting connection to a thrust piece (19), wherein preferably the connecting means (20) are arranged in the area of at least one recess (10, 11) passing through the molded part (4) for receiving the thrust piece (19).

16. The electrical sensor (1) according to any one of claims 11 to 15, wherein the carrier element (2) and/or the molded part (4) is/are made of an electrically insulating and thermally conductive plastic.

17. The electrical sensor (1) according to one of claims 11 to 16, wherein the carrier element (2), the measuring resistor (3) and/or the molded part (4) are at least in areas encapsulated with a plastic (12), preferably with a thermally conductive plastic, and/or surrounded by a housing (31).

## Revendications

1. Procédé de fabrication d'un capteur électrique (1), en particulier d'un capteur de température, dans lequel un élément de support (2) en matière plastique est équipé d'une résistance de mesure sans fil (3) ayant la forme d'un composant SMD qui comporte des surfaces de connexion électriques (5, 6) situées à l'extérieur, dans lequel le composant SMD est agencé et orienté sur l'élément de support (2) de telle sorte que les surfaces de connexion électriques (5, 6) viennent se positionner sur le côté opposé à l'élément de support (2),
dans lequel l'élément de support (2) équipé de la résistance de mesure (3) est assemblé avec une pièce moulée (4) en matière plastique, de sorte que la résistance de mesure (3) est recouverte et maintenue dans certaines zones par la pièce moulée (4) et les surfaces de connexion électriques (5, 6) de la résistance de mesure (3) sont exposées au moins dans certaines zones, puis la résistance de mesure (3) est électriquement reliée à des fils de connexion (7, 8) par l'intermédiaire des surfaces de connexion électriques (5, 6) exposées au moins dans certaines zones, dans lequel la pièce moulée (4) est utilisée pour guider et/ou positionner les fils de connexion (7, 8) et le guidage s'effectue par l'intermédiaire de canaux de guidage (13, 14) formés dans la pièce moulée (4).

2. Procédé selon la revendication 1, dans lequel la pièce moulée (4) est assemblée à force et/ou par complémentarité de formes avec l'élément de support (2), par exemple par un assemblage par emboîtement, pression, coincement et/ou encliquetage.

3. Procédé selon la revendication 1 ou 2, dans lequel la résistance de mesure (3) est insérée, de préférence de manière affleurante, dans un évidement (9) de l'élément de support (2) lors du montage de l'élément de support (2).

4. Procédé selon l'une des revendications précédentes, dans lequel les canaux de guidage (13, 14) formés dans la pièce moulée (4) sont agencés à distance l'un de l'autre et/ou parallèlement l'un à l'autre, de sorte que les fils de connexion (7, 8) sont électriquement isolés par la pièce moulée (4).

5. Procédé selon l'une des revendications précédentes, dans lequel les fils de connexion (7, 8) sont électriquement reliés aux surfaces de connexion électriques (5, 6) de la résistance de mesure (3) dans la zone d'au moins un évidement (10, 11) traversant la pièce moulée (4).

6. Procédé selon l'une des revendications précédentes, dans lequel les fils de connexion (7, 8) sont électriquement reliés aux surfaces de connexion électriques (5, 6) de la résistance de mesure (4) par brasage et/ou coincement.

7. Procédé selon l'une des revendications précédentes, dans lequel une pièce de pression (19) est utilisée pour réaliser une connexion électrique par coincement, dans lequel la pièce de pression (19) est de préférence insérée dans un évidement (10, 11) traversant la pièce moulée (4), de sorte qu'au moins un fil de connexion (7, 8) est pressé contre une surface de connexion électrique (5, 6) de la résistance de mesure (3).

8. Procédé selon l'une des revendications précédentes, dans lequel après la connexion électrique des fils de connexion (7, 8) avec les surfaces de connexion électriques (5, 6) de la résistance de mesure (3), l'élément de support (2), la résistance de mesure (3) et/ou la pièce moulée (4) sont revêtus au moins dans certaines zones en injectant une matière plastique (12), de préférence une matière plastique thermiquement conductrice, et/ou sont insérés dans un boîtier (31).

9. Procédé selon l'une des revendications précédentes, dans lequel le procédé est automatisé par étape individuelles ou à toutes ses étapes, de préférence dans un automate de montage.

10. Procédé selon l'une des revendications précédentes, dans lequel un élément de support (2) et/ou une pièce moulée (4) en matière plastique électriquement isolante et thermiquement conductrice est (sont) utilisé(s).

11. Capteur électrique (1), en particulier un capteur de température, comportant un élément de support (2) en matière plastique qui est équipé d'une résistance de mesure (3), ayant de préférence la forme d'un composant SMD, et d'une pièce moulée (4) qui est assemblée à force et/ou par complémentarité de formes avec l'élément de support (2),
dans lequel la pièce moulée (4)
- est fabriquée en matière plastique, en particulier en matière plastique électriquement isolante et thermiquement conductrice,
- est traversée par au moins un évidement (10, 11),
- comporte au moins un canal de guidage (13, 14) qui se termine dans un évidement (10, 11) traversant la pièce moulée (4),
- et comporte des moyens d'assemblage (15) pour un assemblage à force et/ou par complémentarité de formes avec l'élément de support (2),
et dans lequel un fil de connexion (7, 8) est inséré dans le au moins un canal de guidage (13, 14) de la pièce moulée (4), lequel fil de connexion est électriquement relié, de préférence par brasage et/ou coincement, à une surface de connexion électrique (5, 6) de la résistance de mesure (3) dans la zone de l'évidement (10, 11).

12. Capteur électrique (1) selon la revendication 11, dans lequel les moyens d'assemblage (15) comprennent au moins deux moyens d'assemblage (15) réalisés en forme de broches pour assembler la pièce moulée (4) avec l'élément de support (2) et/ou sont agencés sur une surface d'appui (16) de la pièce moulée (4) par l'intermédiaire de laquelle la pièce moulée (4) peut être en appui sur l'élément de support (2).

13. Capteur électrique (1) selon la revendication 11 ou 12, dans lequel sont prévus au moins deux évidements (10, 11) traversant la pièce moulée (4) qui sont agencés de préférence à distance l'un de l'autre et/ou décalés l'un de l'autre.

14. Capteur électrique (1) selon l'une des revendications 11 à 13, dans lequel sont prévus au moins deux canaux de guidage (13, 14) qui sont agencés à distance l'un de l'autre et/ou parallèlement l'un à l'autre, dans lequel chaque canal de guidage (13, 14) se termine de préférence dans un évidement (10, 11) traversant la pièce moulée (4).

15. Capteur électrique (1) selon l'une des revendications 11 à 14, dans lequel la pièce moulée (4) comporte des moyens d'assemblage (20) pour un assemblage à force et/ou par complémentarité de formes avec une pièce de pression (19), dans lequel les moyens d'assemblage (20) sont de préférence agencés dans la zone d'au moins un évidement (10, 11) traversant la pièce moulée (4) de manière à recevoir la pièce de pression (19).

16. Capteur électrique (1) selon l'une des revendications 11 à 15, dans lequel l'élément de support (2) et/ou la pièce moulée (4) est (sont) fabriqué(s) à partir d'une matière plastique électriquement isolante et thermiquement conductrice.

17. Capteur électrique (1) selon l'une des revendications 11 à 16, dans lequel l'élément de support (4), la résistance de mesure (3) et/ou la pièce moulée (4) sont revêtus au moins dans certaines zones en injectant une matière plastique (12), de préférence une matière plastique thermiquement conductrice, et/ou sont entourés d'un boîtier (31).
